# EUROPÄISCHE PATENTSCHRIFT

(11) **EP 2 652 081 B1**
(45) Veröffentlichungstag und Bekanntmachung des Hinweises auf die Patenterteilung: **17.12.2014**
(21) Anmeldenummer: 11810815.8
(22) Anmeldetag: 13.12.2011
(51) Int. Cl.: C09K 11/02, C04B 26/02, B29C 39/02, B29C 39/10, B29C 67/24, E01C 9/00

(54) **VERFAHREN ZUR HERSTELLUNG VON FORMELEMENTEN MIT PHOTOLUMINESZIERENDEN UND/ODER NACHTLEUCHTENDEN PARTIKELN, FORMELEMENT UND VERBUNDPLATTE AUS EINER MEHRZAHL VON FORMELEMENTEN**
METHOD FOR PRODUCING MOLDED ELEMENTS COMPRISING PHOTOLUMINESCENT AND/OR NIGHT LUMINOUS PARTICLES, A MOLDED ELEMENT AND COMPOSITE PLATE MADE OF A PLURALITY OF MOLDED ELEMENTS
PROCÉDÉ DE FABRICATION D'ÉLÉMENTS FAÇONNÉS PRÉSENTANT DES PARTICULES PHOTOLUMINESCENTES ET/OU À LUMINESCENCE NOCTURNE, ÉLÉMENT FAÇONNÉ ET PLAQUE COMPOSITE CONSTITUÉE D'UNE PLURALITÉ D'ÉLÉMENTS FAÇONNÉS

(30) Priorität: 14.12.2010 DE 102010063000
(43) Veröffentlichungstag der Anmeldung: 23.10.2013
(73) Patentinhaber: Polycare Research Technology GmbH & Co. KG, 98559 Gehlberg (DE)
(72) Erfinder: DUST, Gerhard, 51645 Gummersbach (DE); PLÖTNER, Michael, 98559 Gehlberg (DE)
(74) Vertreter: Liedtke, Markus
(86) Internationale Anmeldenummer: PCT/EP2011/072625
(87) Internationale Veröffentlichungsnummer: WO 2012/080261

(56) Entgegenhaltungen:
- EP-A1- 0 983 977
- WO-A1-2010/134805
- DATABASE WPI Week 201107 Thomson Scientific, London, GB; AN 2010-N02179 XP002673614, & KR 2010 0107631 A (JAYUNCHURUM) 6. Oktober 2010 (2010-10-06)

## Beschreibung

Die Erfindung betrifft ein Verfahren zur Herstellung von Formelementen mit photolumineszierenden Partikeln gemäß dem Oberbegriff des Anspruchs 1. Weiterhin betrifft die Erfindung ein Formelement mit photolumineszierenden Partikeln gemäß dem Oberbegriff des Anspruchs 11. Weiterhin betrifft die Erfindung eine Anordnung aus einer Mehrzahl von Formelementen mit photolumineszierenden Partikeln gemäß dem Oberbegriff des Anspruchs 13.

Die DE 10 2008 004 165 bezieht sich auf einen Formstein mit nachleuchtenden Eigenschaften. Um eine einfache und dauerhafte Möglichkeit für nachleuchtende Pflastersteine zur Verfügung zu stellen, ist dabei vorgesehen, den für die Betonherstellung üblichen Komponenten und Zuschlagstoffen photolumineszente Leuchtpigmente beizumischen.

Aus der KR 10-2010-0107631 ist ein elastischer Block für einen Fahrbahnbelag bekannt. Der elastische Block umfasst eine Betonschicht, auf welcher eine erste Gemischschicht, eine zweite Gemischschicht und eine Beschichtungsschicht angeordnet sind. Die erste Gemischschicht besteht aus Zement und einem Polyurethanbindemittel in einem Gewichtsverhältnis von 1:2 bis 2:1. Die zweite Gemischschicht besteht aus einem Polyurethanbindemittel mit einem Anteil von 60 Gewichtsprozent bis 90 Gewichtsprozent, einer glänzenden Farbe mit einem Anteil von 5 Gewichtsprozent bis 30 Gewichtsprozent und einem Dispersionsmittel mit einem Anteil von 5 Gewichtsprozent bis 20 Gewichtsprozent.

Der Erfindung liegt die Aufgabe zu Grunde, ein gegenüber dem Stand der Technik verbessertes und insbesondere kostengünstigeres Verfahren zur Herstellung von Formelementen mit photolumineszierenden Partikeln, ein Formelement mit photolumineszierenden Partikeln und eine Anordnung aus einer Mehrzahl von Formelementen anzugeben, wobei insbesondere eine Oberflächenqualität und eine chemische und/oder mechanische Beständigkeit des Formelements signifikant verbessert sind.

Die Aufgabe wird hinsichtlich des Verfahrens erfindungsgemäß gelöst durch die im Anspruch 1 angegebenen Merkmale. Hinsichtlich des Formelements wird die Aufgabe durch die im Anspruch 11 angegebenen Merkmale gelöst. Hinsichtlich der Anordnung wird die Aufgabe durch die im Anspruch 13 angegebenen Merkmale gelöst.

Vorteilhafte Ausgestaltungen der Erfindung sind Gegenstand der Unteransprüche.

Beim Verfahren zur Herstellung von Formelementen mit photolumineszierenden Partikeln werden die Formelemente aus Polymerbeton gebildet, in dessen Tragschicht, welche durch eine Oberflächenschicht bedeckt und geschützt wird, photolumineszierende Partikel und optional weitere Partikel eingebracht werden. Dadurch ist ein haltbares Formelement mit photolumineszierenden und/oder nachtleuchtenden Eigenschaften ermöglicht, wobei die photolumineszierenden Partikel vorteilhafterweise nur in der Tragschicht angeordnet sind. Somit ist mit einer besonders geringen Menge an photolumineszierenden Partikeln ein vergleichbarer Effekt erzielbar, wie mit einem Beimischen der Leuchtpartikel in das gesamte Formelement. Die photolumineszierenden Partikel sind besonders vorteilhafterweise nur in den sichtbaren Bereichen des Formelements angeordnet. Dadurch sinken die Produktionskosten des Formelements mit photolumineszierenden Partikeln signifikant.

In einem ersten Verfahrensschritt wird auf eine Gussform oder zumindest auf eine Oberfläche der Gussform ein Trennmittel aufgebracht. Dadurch ist das Formelement besonders einfach aus der Gussform entnehmbar.

In einem zweiten Verfahrensschritt wird ein farbloses Gelcoat mit hoher Abriebfestigkeit und/oder Verwitterungsbeständigkeit als Oberflächenschicht (mit einer hohen mechanischen und/oder chemischen Beständigkeit) in die Gussform maschinell oder manuell eingebracht. Somit ist eine Oberflächenschicht, welche das Formelement schützend umgibt oder umschließt, mit einer besonders hohen chemischen und/oder mechanischen Beständigkeit ermöglicht.

In einem dritten Verfahrensschritt wird ein farbloses Gelcoat als Tragschicht der photolumineszierenden Partikel auf die angetrocknete Oberflächenschicht aufgebracht, wobei die photolumineszierenden Partikel und optional weitere Partikel anschließend in die Tragschicht eingebracht oder auf die Tragschicht aufgebracht und durch Adhäsionskräfte an und/oder in der Tragschicht gehalten werden. Dadurch sind die photolumineszierenden Partikel in und/oder an der Tragschicht gehalten, ohne die Oberflächenschicht zu beschädigen. Bedingt durch die Einbettung der photolumineszierenden Partikel in die Tragschicht werden die photolumineszierenden Partikel somit besonders sparsam angewendet. Besonders vorteilhafterweise sind in die Tragschicht weitere Partikel einbringbar, mit denen vorteilhafte optische Effekte und/oder Muster erzielbar sind.

In einem vierten Verfahrensschritt kann ein farbiges Gelcoat auf die angetrocknete Tragschicht aufgebracht werden. Somit sind Formelemente aus Polymerbeton in allen Farben herstellbar.

In einem fünften Verfahrensschritt wird die Gussform mit einem Polymerbetongemisch ausgefüllt. Dieses herkömmliche Polymerbetongemisch bildet den Hauptsbestandteil des Formelementes, wodurch Formelemente mit photolumineszierenden und/oder nachtleuchtenden Eigenschaften besonders kostengünstig herstellbar sind.

Die photolumineszierenden Partikel werden gleichmäßig verteilt, punktuell konzentriert, in Form von Zeichen, Buchstaben und/oder Zahlen in die Tragschicht eingebracht. Somit sind alle erdenkbaren Formen und/oder Zeichen mittels der photolumineszierenden Partikel ausbildbar.

Als weitere Partikel können Glassplitter, Gesteinssplitter und/oder farbiger oder eingefärbter Sand oder Sandgemische in die Tragschicht eingebracht werden. Dadurch ist eine optische ansprechende Oberflächengestaltung des Formelements ermöglicht, welche nicht nur die photolumineszierenden Partikel umfasst.

Das Formelement mit photolumineszierenden Partikeln ist aus Polymerbeton gebildet, welchen oberflächenseitig eine Tragschicht umgibt oder bedeckt, welche durch eine Oberflächenschicht bedeckt und geschützt ist, wobei in die Tragschicht photolumineszierende Partikel und optional weitere Partikel eingebracht sind.

Bei der Verbundplatte aus einer Mehrzahl von Formelementen mit photolumineszierenden Partikeln gemäß Anspruch 11 oder 12 ist die Mehrzahl von Formelementen zu einem Muster zusammengesetzt, welches eine im Wesentlichen quadratische Grundfläche bedeckt, wobei die einzelnen Formelemente als polygonale Quadrate, Rechtecke und/oder Vielecke ausgebildet und mittels eines rückseitig der Formelemente form-, kraft- und/oder stoffschlüssig angeordneten Armierungsgewebes miteinander derart verbunden sind, dass die einzelnen Formelementen voneinander beabstandet angeordnet sind, wobei Außenkanten der Verbundplatte derart korrespondierend zueinander ausgebildet sind, dass Verbundplatten mit unterschiedlichen Mustern in variabler Anordnung zueinander anordbar sind.

Ausführungsbeispiele der Erfindung werden im Folgenden anhand von Zeichnungen näher erläutert.

Darin zeigen:
- Figur 1: schematisch eine Schnittdarstellung durch ein erfindungsgemäßes Formelement und
- Figur 2: schematisch eine erfindungsgemäße Verbundplatte aus einer Mehrzahl von Formelementen.

Einander entsprechende Teile sind in allen Figuren mit den gleichen Bezugszeichen versehen.

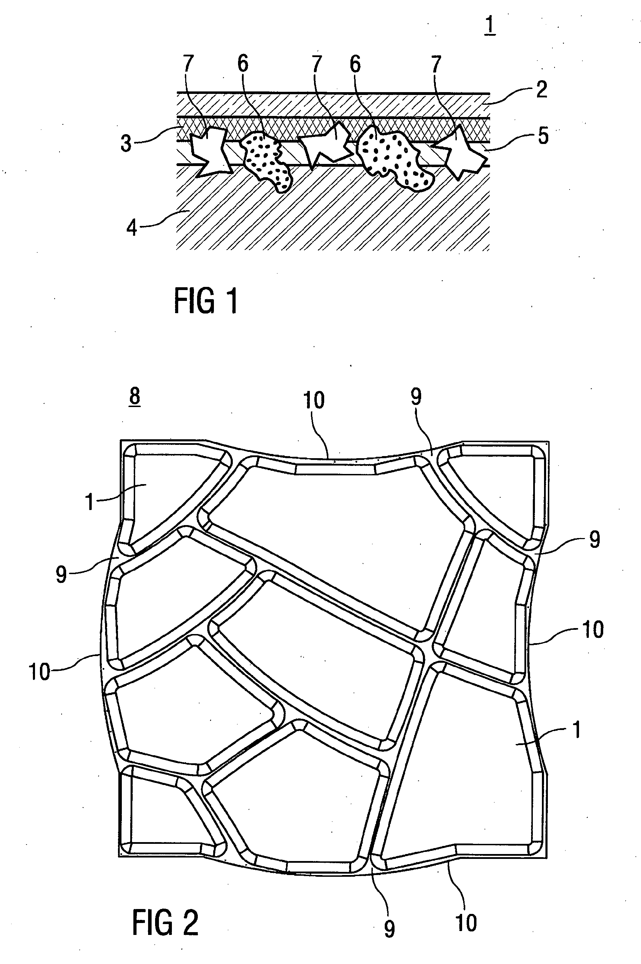

In Figur 1 ist schematisch eine Schnittdarstellung durch ein erfindungsgemäßes Formelement 1 dargestellt. Das Formelement 1 ist aus einer Mehrzahl einzelner Schichten gebildet und umfasst zumindest eine Oberflächenschicht 2, eine Tragschicht 3 und eine Schicht 4 des Polymerbetongemisches. Dabei ist das Formelement 1 im Wesentlichen aus der Schicht 4 des Polymerbetongemisches gebildet, welche oberflächenseitig mit der Oberflächenschicht 2 und der Tragschicht 3 beschichtet ist. Diese oberflächenseitige Beschichtung der Schicht 4 des Polymerbetongemisches kann dabei das Formelement 1 vollständig umschließen oder in einer alternativen Ausführungsform nur teil- oder abschnittsweise bedecken.

In einer alternativen Ausführungsform der Erfindung kann zwischen der Tragschicht 3 und der Schicht 4 des Polymerbetongemisches eine zusätzliche Farbschicht 5 angeordnet sein.

Die Oberflächenschicht 2 ist eine Schicht eines farblosen herkömmlichen Gelcoats mit einer Schichtdicke von vorzugsweise 0,8 bis1 ,0 mm. Die Oberflächenschicht 2 weist eine besonders hohe mechanische und/oder chemische Beständigkeit auf und ist beispielweise besonders abriebfest und verwitterungsbeständig.

Die Tragschicht 3 ist aus einem herkömmlichen farblosen Gelcoat gebildet, welches eine im Vergleich zur Oberflächenschicht 2 verringerte mechanische und/oder chemische Beständigkeit aufweisen kann. In die Tragschicht 3 sind herkömmliche photolumineszierende und/oder nachtleuchtende Partikel 6 eingebracht. Dabei werden die photolumineszierenden und/oder nachtleuchtenden Partikel 6 auf die Tragschicht 3 aufgestreut und können in selbige einsinken, wobei die photolumineszierenden und/oder nachtleuchtenden Partikel 6 durch Adhäsionskräfte an und in der Tragschicht 3 gehalten sind. Die Korngröße der photolumineszierenden und/oder nachtleuchtenden Partikel 6 beträgt vorzugsweise 3 bis 5 mm. Die Schichtdicke der Tragschicht 3 beträgt vorzugsweise 0,8 bis1 ,0 mm.

In einer alternativen Ausführungsform können in die Tragschicht 3 weitere Partikel 7 eingebettet werden. Dabei können als weitere Partikel 7 herkömmliche Glassplitter, Gesteinssplitter und/oder farbiger oder eingefärbter Sand oder Sandgemische in die Tragschicht 3 eingebettet werden.

Die Farbschicht 5 ist aus einem herkömmlichen farbigen oder eingefärbten Gelcoat gebildet. Die Schicht 4 ist aus einem herkömmlichen Polymerbetongemisch gebildet.

Das Formelement 1 ist als im Wesentlichen flächiges Formelement oder als dreidimensional ausgeformtes Formelement, beispielweise als Kugel, Pyramide, Kegel oder Kegelstumpf, ausgeformt.

In einer vorteilhaften Ausführungsform ist das Formelement 1 als Randstein, Wegbegrenzungsstein, Mauerabdeckung, Gehwegplatte oder Rasenkantenstein ausgeformt.

In einer weiteren vorteilhaften Ausführungsform ist das Formelement 1 als Trittstein ausgeformt, wobei die einzelnen Trittstein korrespondierend zueinander ausgeformt sein können, so dass eine Mehrzahl von Trittsteinen im Verbund verlegbar ist, oder die Trittsteine einzeln, voneinander beabstandet verlegbar sind.

In einer alternativen Ausführungsform ist das Formelement 1 als Zaun-, Torpfosten, Stehle oder Pfeiler ausgebildet oder als Aufsatz oder Abdeckung für einen Zaun-, Torpfosten, Stehle oder Pfeiler ausgeformt.

In einer weiteren alternativen Ausführungsform ist das Formelement 1 als wegweisendes und/oder hinweisendes Element, beispielsweise als Wegweiser, Werbeschild, Warn- oder Hinweisschild ausgeformt.

In einer besonders vorteilhaften Ausführungsform ist das Formelement 1 als Verbundplatte 8 ausgeformt. Eine solche Verbundplatte 8 umfasst eine Mehrzahl von Formelementen 1, welche zu einem Muster zusammengesetzt sind. Dieses Muster bedeckt eine im Wesentlichen quadratische Grundfläche. Dabei sind die einzelnen Formelemente 1 als polygonale Quadrate, Rechtecke und/oder Vielecke ausgebildet. Die einzelnen Formelemente 1 sind mittels eines rückseitig der Formelemente 1 form-, kraft- und/oder stoffschlüssig angeordneten Armierungsgewebes 9 miteinander verbunden. Dabei sind die Formelemente 1 voneinander beabstandet auf dem Armierungsgewebe 9 so dass zwischen den benachbart angeordneten Formelementen 1 ein Zwischenraum von beispielsweise 3 bis 10 mm entsteht. Somit ist die Verbundplatte 8 wasserdurchlässig und eine Verbundplatte 8 zählt vorteilhafterweise nicht als versiegelte Fläche.

Die Außenkanten 10 der Verbundplatte 8 sind derart korrespondierend zueinander ausgebildet, dass Verbundplatten 8 mit unterschiedlichen Mustern in variabler Anordnung zueinander anordbar sind.

In einer weiteren besonders vorteilhaften Ausführungsform weisen die Verbundplatten 8 an einer jeden Außenkante 10 eine unterschiedliche Anordnung der einzelnen Formelemente 1 auf, so dass je nach seitlicher Zusammenführung oder Anordnung der einzelnen Verbundplatten 8 unterschiedliche oder variable Gesamtmuster erzeugbar sind. Somit sind besonders vorteilhafterweise individuelle Verlegemuster der Verbundplatten 8 ermöglicht.

Beim Verfahren zur Herstellung von Formelementen 1 mit photolumineszierenden und/oder nachtleuchtenden Partikeln 6 wird in einem ersten Verfahrensschritt auf eine Gussform oder zumindest auf eine Oberfläche der Gussform ein Trennmittel aufgebracht. Dabei kann das Trennmittel manuell aufgetragen werden oder maschinell aufgespritzt werden.

In einem zweiten Verfahrensschritt wird das farblose Gelcoat mit hoher Abriebfestigkeit und/oder Verwitterungsbeständigkeit als Oberflächenschicht 2 mit einer hohen mechanischen und/oder chemischen Beständigkeit in die Gussform maschinell oder manuell eingebracht oder aufgetragen.

In einem dritten Verfahrensschritt wird das farblose Gelcoat, welches die Tragschicht 3 der photolumineszierenden und/oder nachtleuchtenden Partikel 6 und/oder der weitere Partikel 7 bildet, auf die angetrocknete Oberflächenschicht 2 aufgebracht oder aufgetragen. Anschließenden werden die photolumineszierenden und/oder nachtleuchtenden Partikel 6 und/oder der weitere Partikel 7 in die Tragschicht 3 eingestreut. Dabei können die photolumineszierenden und/oder nachtleuchtenden Partikel 6 gleichmäßig verteilt in die Tragschicht 3 eingebracht werden. In einer alternativen Ausführungsform können die photolumineszierenden und/oder nachtleuchtenden Partikel 6 punktuell konzentriert in die Tragschicht 3 eingebracht werden, beispielweise in Form von Zeichen, Buchstaben und/oder Zahlen.

In einem vierten Verfahrensschritt kann das farbige Gelcoat als Farbschicht 5 auf die angetrocknete Tragschicht 3 aufgebracht oder aufgetragen werden.

In einem fünften Verfahrensschritt wird die Gussform vollständig mit einem Polymerbetongemisch ausgefüllt. Dabei kann das Herstellen des Polymerbetongemischs mittels einer herkömmlichen Betonmischmaschine oder einer kontinuierlichen Gießmaschine erfolgen. In einer besonders vorteilhaften Ausführungsform können dem Polymerbetongemisch leichte Füllstoffe zugefügt werden, so dass ein gewichtsreduziertes Formelement 1 entsteht.

In einem weiteren, alternativen Verfahrensschritt kann das Armierungsgewebe 9 zur Bildung einer Verbundplatte 8 rückseitig auf das Polymerbetongemisch der einzelnen Formelemente 1 aufgelegt werden, so dass es in die Schicht 4 des Polymerbetongemischs derart einsinkt, dass es im Bereich der einzelnen Formelemente1 vollständig vom Polymerbetongemisch umschlossen ist.

### BEZUGSZEICHENLISTE

- 1: Formelement
- 2: Oberflächenschicht
- 3: Tragschicht
- 4: Schicht aus Polymerbetongemisch
- 5: Farbschicht
- 6: photolumineszierende und/oder nachtleuchtende Partikel
- 7: Partikel
- 8: Verbundplatte
- 9: Armierungsgewebe
- 10: Außenkante

## Patentansprüche

1. Verfahren zur Herstellung von Formelementen (1) mit photolumineszierenden Partikeln (6),
wobei die Formelemente (1) aus Polymerbeton gebildet werden, in dessen Tragschicht (3), welche durch eine Oberflächenschicht (2) bedeckt und geschützt wird, photolumineszierende Partikel (6) eingebracht werden, wobei der Polymerbeton den Hauptbestandteil des Formelementes (1) bildet.

2. Verfahren nach Anspruch 1,
**dadurch gekennzeichnet, dass** in die Tragschicht (3) weitere Partikel (7) eingebracht werden.

3. Verfahren nach Anspruch 1 oder 2,
**dadurch gekennzeichnet, dass** in einem ersten Verfahrensschritt auf eine Gussform oder zumindest auf eine Oberfläche der Gussform ein Trennmittel aufgebracht wird.

4. Verfahren nach einem der Ansprüche 1 bis 3,
**dadurch gekennzeichnet, dass** in einem zweiten Verfahrensschritt ein farbloses Gelcoat mit hoher Abriebfestigkeit und/oder Verwitterungsbeständigkeit als Oberflächenschicht (2) mit einer hohen mechanischen und/oder chemischen Beständigkeit in die Gussform maschinell oder manuell eingebracht wird.

5. Verfahren nach einem der vorherigen Ansprüche,
**dadurch gekennzeichnet, dass** in einem dritten Verfahrensschritt ein farbloses Gelcoat als Tragschicht (3) der photolumineszierenden Partikel (6) auf die angetrocknete Oberflächenschicht (2) aufgebracht wird, wobei die photolumineszierenden Partikel (6) anschließend in die Tragschicht (3) eingebracht oder auf die Tragschicht (3) aufgebracht und durch Adhäsionskräfte an und/oder in der Tragschicht (3) gehalten werden.

6. Verfahren nach Anspruch 5,
**dadurch gekennzeichnet, dass** im dritten Verfahrensschritt weitere Partikel (7) in die Tragschicht (3) eingebracht oder auf die Tragschicht (3) aufgebracht und durch Adhäsionskräfte an und/oder in der Tragschicht (3) gehalten werden.

7. Verfahren nach Anspruch 5 oder 6,
**dadurch gekennzeichnet, dass** in einem vierten Verfahrensschritt ein farbiges Gelcoat auf die angetrocknete Tragschicht (3) aufgebracht wird.

8. Verfahren nach einem der vorherigen Ansprüche,
**dadurch gekennzeichnet, dass** in einem fünften Verfahrensschritt die Gussform mit einem Polymerbetongemisch ausgefüllt wird.

9. Verfahren nach einem der vorherigen Ansprüche,
**dadurch gekennzeichnet, dass** die photolumineszierenden Partikel (6) gleichmäßig verteilt, punktuell konzentriert, in Form von Zeichen, Buchstaben und/oder Zahlen in die Tragschicht (3) eingebracht werden.

10. Verfahren nach einem der Ansprüche 2 bis 9,
**dadurch gekennzeichnet, dass** als weitere Partikel (7) Glassplitter, Gesteinssplitter und/oder farbiger oder eingefärbter Sand oder Sandgemische in die Tragschicht (3) eingebracht werden.

11. Formelement (1) mit photolumineszierenden Partikeln (6),
gebildet aus Polymerbeton, welchen oberflächenseitig eine Tragschicht (3) umgibt oder bedeckt, welche durch eine Oberflächenschicht (2) bedeckt und geschützt ist, wobei in die Tragschicht (3) photolumineszierende Partikel (6) eingebracht sind, wobei der Polymerbeton den Hauptbestandteil des Formelementes (1) bildet.

12. Formelement nach Anspruch 11,
**dadurch gekennzeichnet, dass** in die Tragschicht (3) weitere Partikel (7) eingebracht sind.

13. Anordnung aus einer Mehrzahl von Formelementen (1) mit photolumineszierenden Partikeln (6) gemäß Anspruch 11 oder 12 **dadurch gekennzeichnet, dass** die Mehrzahl von Formelementen (1) zu einem Muster zusammengesetzt ist, welches eine im Wesentlichen quadratische Grundfläche bedeckt, wobei die einzelnen Formelemente (1) als polygonale Quadrate, Rechtecke und/oder Vielecke ausgebildet und mittels eines rückseitig der Formelemente (1) form-, kraft- und/oder stoffschlüssig angeordneten Armierungsgewebes (9) derart miteinander zu einer Verbundplatte (8) gekoppelt sind, dass die einzelnen Formelemente (1) voneinander beabstandet angeordnet sind, wobei Außenkanten (10) der Verbundplatte (8) derart korrespondierend zueinander ausgebildet sind, dass Verbundplatten (8) mit unterschiedlichen Mustern in variabler Anordnung zueinander anordbar sind.

## Claims

1. Method for producing molded elements (1) comprising photoluminescent particles (6),
wherein the molded elements (1) are formed from polymer concrete, into the base layer (3) of which, which is covered and protected by a surface layer (2), photoluminescent particles (6) are introduced, wherein the polymer concrete forms the main constituent of the molded element (1).

2. Method according to Claim 1,
**characterized in that** further particles (7) are introduced into the base layer (3).

3. Method according to Claim 1 or 2,
**characterized in that**, in a first method step, a release agent is applied to a casting mold or at least to a surface of the casting mold.

4. Method according to one of Claims 1 to 3,
**characterized in that**, in a second method step, a colorless gel coat having a high abrasion resistance and/or weathering resistance is introduced mechanically or manually into the casting mold as a surface layer (2) having a high mechanical and/or chemical resistance.

5. Method according to one of the preceding claims,
**characterized in that**, in a third method step, a colorless gel coat is applied to the initially dried surface layer (2) as the base layer (3) of the photoluminescent particles (6), wherein the photoluminescent particles (6) are then introduced into the base layer (3) or applied to the base layer (3) and held on and/or in the base layer (3) by adhesive forces.

6. Method according to Claim 5,
**characterized in that**, in the third method step, further particles (7) are introduced into the base layer (3) or applied to the base layer (3) and held on and/or in the base layer (3) by adhesive forces.

7. Method according to Claim 5 or 6,
**characterized in that**, in a fourth method step, a colored gel coat is applied to the initially dried base layer (3).

8. Method according to one of the preceding claims,
**characterized in that**, in a fifth method step, the casting mold is filled with a polymer concrete mixture.

9. Method according to one of the preceding claims,
**characterized in that** the photoluminescent particles (6) are introduced into the base layer (3) in a uniform distribution, concentrated at points, in the form of characters, letters and/or numbers.

10. Method according to one of Claims 2 to 9,
**characterized in that** glass fragments, rock fragments and/or colored or dyed sand or sand mixtures are introduced into the base layer (3) as further particles (7).

11. Molded element (1) comprising photoluminescent particles (6),
formed from polymer concrete, which on the surface is surrounded or covered by a base layer (3), which is covered and protected by a surface layer (2), wherein photoluminescent particles (6) are introduced into the base layer (3), wherein the polymer concrete forms the main constituent of the molded element (1).

12. Molded element according to Claim 11,
**characterized in that** further particles (7) are introduced into the base layer (3).

13. Assembly consisting of a plurality of molded elements (1) comprising photoluminescent particles (6) according to Claim 11 or 12,
**characterized in that** the plurality of molded elements (1) are assembled to form a pattern which covers a substantially square area, wherein the individual molded elements (1) are formed as polygonal squares, rectangles and/or polygons and are coupled to one another to form a composite plate (8) by means of a woven reinforcing fabric (9) arranged in a form-fitting, force-fitting and/or integral manner on the rear side of the molded elements (1) in such a manner that the individual molded elements (1) are arranged spaced apart from one another, wherein outer edges (10) of the composite plate (8) are formed so as to correspond to one another in such a manner that composite plates (8) with different patterns can be arranged in a variable arrangement in relation to one another.

## Revendications

1. Procédé de fabrication d'éléments façonnés (1) présentant des particules photoluminescentes (6), dans lequel on forme les éléments façonnés (1) en béton de polymère, dont la couche porteuse (3), qui est recouverte et protégée par une couche superficielle (2), contient des particules photoluminescentes (6), dans lequel le béton de polymère forme le composant principal de l'élément façonné (1).

2. Procédé selon la revendication 1, **caractérisé en ce que** l'on incorpore d'autres particules (7) dans la couche porteuse (3).

3. Procédé selon la revendication 1 ou 2, **caractérisé en ce que**, dans une première étape de procédé, on dépose un moyen de séparation sur un moule de coulée ou au moins sur une surface du moule de coulée.

4. Procédé selon l'une quelconque des revendications 1 à 3, **caractérisé en ce que**, dans une deuxième étape de procédé, on introduit à la machine ou à la main dans le moule de coulée un gelcoat incolore présentant une résistance à l'abrasion et/ou une résistance aux intempéries élevée comme couche superficielle (2) avec une haute résistance mécanique et/ou chimique.

5. Procédé selon l'une quelconque des revendications précédentes, **caractérisé en ce que**, dans une troisième étape de procédé, on dépose sur la couche superficielle séchée (2) un gelcoat incolore comme couche porteuse (3) des particules photoluminescentes (6), dans lequel les particules photoluminescentes (6) sont ensuite incorporées dans la couche porteuse (3) ou déposées sur la couche porteuse (3) et maintenues sur et/ou dans la couche porteuse (3) par des forces d'adhérence.

6. Procédé selon la revendication 5, **caractérisé en ce que**, dans la troisième étape de procédé, d'autres particules (7) sont incorporées dans la couche porteuse (3) ou déposées sur la couche porteuse (3) et sont maintenues par des forces d'adhérence sur et/ou dans la couche porteuse (3).

7. Procédé selon la revendication 5 ou 6, **caractérisé en ce que**, dans une quatrième étape de procédé, on dépose un gelcoat incolore sur la couche porteuse séchée (3).

8. Procédé selon l'une quelconque des revendications précédentes, **caractérisé en ce que**, dans une cinquième étape de procédé, on remplit le moule de coulée avec un mélange de béton de polymère.

9. Procédé selon l'une quelconque des revendications précédentes, **caractérisé en ce que** l'on introduit les particules photoluminescentes (6) dans la couche porteuse (3) sous forme uniformément répartie, ponctuellement concentrée, en forme de signes, de caractères d'imprimerie et/ou de chiffres.

10. Procédé selon l'une quelconque des revendications 2 à 9, **caractérisé en ce que** l'on incorpore comme autres particules (7) dans la couche porteuse (3) des éclats de verre, des éclats de pierre et/ou du sable de couleur ou coloré ou des mélanges de sables.

11. Elément façonné (1) présentant des particules photoluminescentes (6), formé en béton de polymère, qu'une couche de support (3) entoure ou recouvre en surface, qui est recouverte et protégée par une couche superficielle (2), dans lequel des particules photoluminescentes (6) sont incorporées dans la couche porteuse (3), dans lequel le béton de polymère forme le composant principal du corps façonné (1).

12. Elément façonné selon la revendication 11, **caractérisé en ce que** d'autres particules (7) sont incorporées dans la couche porteuse (3).

13. Agencement composé d'une multiplicité d'éléments façonnés (1) présentant des particules photoluminescentes (6) selon la revendication 11 ou 12, **caractérisé en ce que** la multiplicité d'éléments façonnés (1) sont réunis en un motif, qui recouvre une face de base essentiellement carrée, dans lequel les éléments façonnés individuels (1) sont réalisés sous forme polygonale carrée, rectangulaire et/ou polygonale et sont couplés les uns aux autres en une plaque composite (8) au moyen d'un tissu d'armature (9) disposé au dos des éléments façonnés (1) par complémentarité de forme, de force et/ou de matière, de telle manière que les éléments façonnés individuels (1) soient disposés à distance l'un de l'autre, dans lequel des bords extérieurs (10) de la plaque composite (8) sont réalisés en correspondance l'un avec l'autre, de telle manière que des plaques composites (8) avec des motifs différents puissent être disposées l'une par rapport à l'autre en un agencement variable.
